# EUROPÄISCHE PATENTSCHRIFT

(11) **EP 3 181 677 B1**
(45) Veröffentlichungstag und Bekanntmachung des Hinweises auf die Patenterteilung: **04.07.2018**
(21) Anmeldenummer: 16002489.9
(22) Anmeldetag: 23.11.2016
(51) Int. Cl.: C11D 3/39, B02C 13/22, B02C 19/06

(54) **FEINTEILIGE BLEICHKATALYSATOREN, VERFAHREN ZU DEREN HERSTELLUNG UND DEREN VERWENDUNG**
FINE PARTICLE BLEACH CATALYSTS, METHOD FOR THEIR PREPARATION AND THEIR USE
CATALYSEURS DE BLANCHIMENT À PARTICULES FINES, SON PROCÉDÉ DE PRODUCTION ET D'UTILISATION

(30) Priorität: 18.12.2015 DE 102015016402
(43) Veröffentlichungstag der Anmeldung: 21.06.2017
(73) Patentinhaber: WeylChem Wiesbaden GmbH, 65203 Wiesbaden (DE)
(72) Erfinder: Barreleiro, Paula, 65462 Ginnheim (DE); Schwarz, Gerhard, 63456 Hanau (DE); Schottstedt, Andreas, 65719 Hofheim (DE); Morschhäuser, Roman, 55122 Mainz (DE)
(74) Vertreter: Ackermann, Joachim

(56) Entgegenhaltungen:
- WO-A1-03/004954
- WO-A1-2015/070976
- DE-A1-102006 036 896
- REINHARDT G ET AL: "MnTACN - A New Catalyst in Automatic Dishwashing Applications", SOFW-JOURNAL SEIFEN, OELE, FETTE, WACHSE, VERLAG FUR CHEMISCHE INDUSTRIE, AUGSBURG, DE, Bd. 138, Nr. 10, 1. Oktober 2012 (2012-10-01), Seiten 52-62, XP001579507, ISSN: 0942-7694

## Beschreibung

Die vorliegende Erfindung betrifft teilchenförmige Bleichkatalysatoren mit definierter Korngrößenverteilung, ein Verfahren zu deren Herstellung sowie ihre Verwendung in Wasch- und Reinigungsmitteln, insbesondere in Mitteln für die maschinelle Reinigung von Geschirr.

Um fleckenloses Geschirr zu erhalten, werden in Geschirrspülmitteln Persalze als Bleichmittel, wie Perborate und Percarbonate, eingesetzt. Zur Aktivierung dieser Bleichmittel und um beim Reinigen bei Temperaturen von 60 °C und darunter eine zufriedenstellende Bleichwirkung zu erreichen, enthalten die Geschirrspülmittel in der Regel weiterhin Bleichaktivatoren oder Bleichkatalysatoren, wobei sich insbesondere die Bleichkatalysatoren als besonders wirkungsvoll erwiesen haben.

Bleichkatalysatoren sind hochreaktiv und werden in Geschirrspülmitteln für die maschinelle Reinigung vorzugsweise in geringen Mengen, beispielsweise in Mengen von 0,002 bis 2 Gew.-%, bezogen auf das fertige Geschirrspülmittel eingesetzt.

Aufgrund der sehr geringen Einsatzmenge an Bleichkatalysator ist eine homogene Verteilung des Bleichkatalysators in der Geschirrspülmittelformulierung schwer zu bewerkstelligen.

Stand der Technik ist, Bleichkatalysatoren in Form vorgefertigter Granulate einzusetzen um die Lagerstabilität zu verbessern und eine möglichst homogene Dosierung zu erreichen.

In WO 2011/066935 A2 entsprechend EP 2 507 251 A2 werden Bleichkatalysator-Compounds beschrieben, welche ausgewählte Mangankomplex-Verbindungen als Bleichkatalysatoren und ausgewählte organische Trägermaterialien enthalten, insbesondere Salze kurzkettiger Alkylbenzolsulfonsäuren mit weniger als 3 Kohlenstoffatomen in der Alkylkette. Die Compounds können gegebenenfalls gecoatet sein. In dieser Schrift gibt es abgesehen auf die Erwähnung des Vorliegens in Pulverform keinen Hinweis auf die Teilchengrößen der Bleichkatalysatoren. Diese dürften aber, da keine besondere Zerkleinerungsmaßnahmen beschrieben werden, im Bereich von deutlich oberhalb von 50 µm liegen.

WO 2010/115582 A1 entsprechend EP2 417 240 A1 lehrt Co-Granulate enthaltend einen Granulatkern und eine den Granulatkern umgebende Hüll- oder Coatingschicht. Diese Co-Granulate sind dadurch gekennzeichnet, dass der Granulatkern Bleichaktivatoren und Bindemittel enthält und dass die Hüll- oder Coatingschicht einen oder mehrere Bleichaktivatoren und ein oder mehrere Coatingmittel enthält. Auch in dieser Schrift gibt es abgesehen auf die Erwähnung des Vorliegens in Pulverform keinen Hinweis auf die Teilchengrößen der Bleichkatalysatoren. Diese dürften aber, da keine besondere Zerkleinerungsmaßnahmen beschrieben werden, im Bereich von deutlich oberhalb von 50 µm liegen. Für die Co-Granulate werden Teilchendurchmesser von 0,2 bis 2 mm angegeben.

WO 97/22680 A1 beschreibt teilchenförmige Zusammensetzungen, enthaltend geringe Mengen an Bleichkatalysator und Enzymen auf Trägermaterialien. Es werden vorzugsweise Kobalt oder Mangan enthaltende Bleichkatalysatoren verwendet. Für die Bleichkatalysatoren werden Partikelgrößen von weniger al 300 µm, bevorzugt von 10 bis 100 µm angegeben. Diese Schrift enthält keine Hinweise darauf, wie diese feinteiligen Bleichkatalysatoren hergestellt werden.

Die DE10 2006 036 896 A1 offenbart ein Wasch- und Reinigungsmittel mit größenoptimierten Bleichwirkstoffen. Beschrieben werden feste Wasch- oder Reinigungsmittel, die teilchenförmiges Alkalipercarbonat mit einer mittleren Teilchengröße im Bereich von 1 bis 2 mm und Teilchen enthaltend eine bleichverstärkende Übergangsmetallkomplexverbindung mit einer mitteleren Teilchengröße im Bereich von 0,8 bis 1,6 mm enthalten. WO 2015/070976 offenbart Geschirrspülmittel, enthaltend Mn-Komplexe mit makrocyclischen Liganden als Bleichkatalysatoren. In DE 60 2004 005 849 T2 entsprechend EP 1 625 196 B1 werden stabile teilchenförmige Zusammensetzungen enthaltend Bleichkatalysatoren beschrieben. Diese enthalten feinpartikuläre Bleichkatalysatoren mit einer mittleren Partikelgröße von <35 µm, Alkali-, Erdalkali- und/oder Aluminiumsalze, ein ausgewähltes wasserlösliches, schmelzbares und/oder thermoplastisches Bindemittel und Wasser. Die eingesetzten Bleichkatalysatoren sind sehr feinteilig und weisen typischerweise mittlere Partikelgrößen im Bereich von 10 nm bis 10 µm auf, wobei 90 % der Partikel Größen von <7 µm haben. Die Herstellung der feinteiligen Bleichkatalysatorpulver erfolgt durch Nassvermahlen oder durch Vermahlen von Pulvern in der Gegenwart von Trockeneis. Dabei werden vorzugsweise Mühlen verwendet, die einen hohen Energieeintrag gestatten. In den Ausführungsbeispielen wird ein Bleichkatalysator eingesetzt. Dabei handelt es sich um einen Mangankomplex, der einen mehrzähnigen, nicht-makrocyclischen Liganden aufweist. Dieser Mangankomplex kann durch den Einsatz unterschiedlicher Mühlen zu einem feinen Pulver vermahlen werden. In diesem Dokument wird ausgeführt, dass die Wirkung der Bleichkatalysatoren durch eine sehr feine Körnung der Aktivsubstanz wesentlich verstärkt wird, wobei die Bleichwirkung durch Zugabe von Alkali-, Erdalkali- und/oder Aluminiumsalzen zusätzlich verstärkt wird, ohne gleichzeitig die Lagerstabilität der Granulate zu beeinträchtigen. Die WO03/004954 offenbart die Herstellung feinteiliger Pulver durch Vermahlen in Dampfstrahlmühlen. Von den bislang am Markt verfügbaren Bleichkatalysatoren haben sich Mangankomplexe und darunter solche mit Liganden, welche Stickstoff- oder Elektronendonorfunktion aufweisen, als besonders wirkungsvoll herausgestellt.

Um eine optimale Wirksamkeit von Bleichkatalysatoren und deren möglichst homogene Verteilung in den Wasch- und Reinigungsmitteln zu erzielen, sollte die Partikelgröße der Bleichkatalysatoren möglichst minimiert werden. Partikel mit Durchmessern oberhalb von 50 µm sind für Verarbeitungen im Sprühverfahren störend. Andererseits sollte der Anteil an sehr feinen Partikeln, beispielsweise von solchen mit Partikelgrößen von weniger als 1 µm begrenzt sein, um inhalationstoxische Gefahren zu minimieren. Es sollten daher möglichst enge Partikelgrößenverteilungen angestrebt werden.

Bei der Suche nach Zerkleinerungsmethoden von Liganden-Mangankomplexen mit Stickstoff-Donorfunktionen, wobei von den Liganden einer oder mehrere makrocyclische Liganden sind, mindestens hat sich herausgestellt, dass diese Komplexe aufgrund ihrer stäbchenförmigen Kristallform häufig schwierig zu zerkleinern sind. Es wird angenommen, dass die Kristalle dieser Mangankomplexe sich aufgrund ihrer nadelförmigen Gestalt in einigen Mühlen lediglich ausrichten und nur schwierig zu zerkleinern sind.

Es wurde daher nach Methoden gesucht, mit denen diese Bleichkatalysatoren zerkleinert werden können und in volumenmittleren Partikelgrößen im Bereich von 1 µm bis 50 µm bereitgestellt werden können, wobei nur ein geringer Anteil an sehr feinteiligen und an grobteiligen Partikeln erzeugt wird.

Aufgabe der vorliegenden Erfindung war es daher, Mangankomplexe mit ausgewählten Stickstoff enthaltenden Liganden bereitzustellen, die einerseits als Bleichkatalysatoren eine erhöhte Wirksamkeit zeigen und die möglichst homogen in Wasch- und Reinigungsmittel eingearbeitet werden können.

Die Erfindung betrifft feinteilige Pulver, enthaltend Partikel mit mindestens 80 Gew. % eines ausgewählten Mangankomplexes, insbesondere eines Mangankomplexes der nachstehend beschriebenen Formel (1) oder Formel (2).

Diese Pulver sind dadurch gekennzeichnet, dass mindestens 70 Gew.-% der Partikel Teilchengrößen im Bereich von 1 µm bis 50 µm aufweisen, höchstens 15 Gew. % der Partikel Teilchengrößen > 50 µm aufweisen und höchstens 15 Gew. % der Partikel Teilchengrößen < 1 µm aufweisen, wobei die Prozentangaben auf die Gesamtmenge der Partikel bezogen sind.

Die Ermittlung der in dieser Beschreibung angegebenen Teilchengrößen erfolgt durch Laser-Diffraktometrie unter Anwendung der Norm ISO13320 (2009).

Bei den Angaben für die Teilchengrößen handelt es sich um die Größen der Primärteilchen. Die erfindungsgemäßen Pulver können auch Aggregate aus den Primärteilchen enthalten. Die Größe dieser Aggregate beträgt typischerweise von 5 µm bis 5000 µm.

Bevorzugte erfindungsgemäße Pulver sind dadurch gekennzeichnet, dass mindestens 90 Gew. % der Partikel Teilchengrößen im Bereich von 2 µm bis 50 µm aufweisen, höchstens 5 Gew. % der Partikel Teilchengrößen > 50 µm aufweisen und höchstens 5 Gew. % der Partikel Teilchengrößen < 2 µm aufweisen, wobei die Prozentangaben auf die Gesamtmenge der Partikel bezogen sind.

In einer besonders bevorzugten Ausführungsform der erfindungsgemäßen Pulver weisen diese volumenmittlere Teilchengrößen D₅₀ im Bereich von 2 µm bis 25 µm auf.

D₅₀ bedeutet, dass 50 Volumen-% der Partikel kleiner sind als der für D₅₀ angegebene Wert. Analog dazu bedeutet D₉₇, dass 97 Volumen-% der Partikel kleiner sind als der für D₉₇ angegebene Wert. Analog dazu bedeuten D₉₉ und D₁₀, dass 99 bzw 10 Volumen-% der Partikel kleiner sind als der für D₉₉ bzw. für D₁₀ angegebene Wert.

In einer außerordentlich bevorzugten Ausführungsform der erfindungsgemäßen Pulver weisen diese volumenmittlere Teilchengrößen D₉₉ < 50 µm und D₁₀ < 5µm auf.

In einer weiteren außerordentlich bevorzugten Ausführungsform der erfindungsgemäßen Pulver weisen diese volumenmittlere Teilchengrößen D₉₇ < 50 µm und D₁₀ < 5 µm auf.

In einer weiteren außerordentlich bevorzugten Ausführungsform der erfindungsgemäßen Pulver weisen diese volumenmittlere Teilchengrößen D₉₉ < 50 µm und D₁₀ < 1 µm auf.

Äußerst bevorzugte erfindungsgemäße Pulver enthalten keine Partikel mit Teilchengrößen von mehr als 100 µm und/oder keine Partikel mit Teilchengrößen von weniger als 100 nm.

In einer weiteren besonders bevorzugten Ausführungsform der erfindungsgemäßen Pulver weisen diese volumenmittleremittlere Teilchengrößen D₉₇ im Bereich von 8 µm bis 35 µm auf.

In einer weiteren außerordentlich bevorzugten Ausführungsform der erfindungsgemäßen Pulver weisen diese volumenmittlere Teilchengrößen D₉₇ im Bereich von 10 µm bis 30 µm auf.

In noch einer weiteren außerordentlich bevorzugten Ausführungsform der erfindungsgemäßen Pulver weisen diese volumenmittlere Teilchengrößen D₉₇ im Bereich von 11 µm bis 25 µm auf.

In noch einer weiteren außerordentlich bevorzugten Ausführungsform der erfindungsgemäßen Pulver weisen diese volumenmittlere Teilchengrößen D₉₇ im Bereich von 12 µm bis 20 µm auf.

Die Teilchengrößenverteilung der erfindungsgemäßen Pulver kann monomodal oder polymodal sein, insbesondere monomodal oder bimodal und ganz besonders bevorzugt monomodal. Die Verteilung kann symmetrisch oder asymetrisch sein.

Als Bleichkatalysatoren werden im Rahmen der vorliegenden Erfindung bleichverstärkende Mangankomplexe mit Stickstoff enthaltenden Liganden verwendet.

Erfindungsgemäß eingesetzt werden Mangankomplexe mit Stickstoff enthaltenden Liganden, wobei von den Liganden einer oder mehrere makrocyclische Liganden sind, insbesondere Komplexe des Mangans in der Oxidationsstufe II, III oder insbesondere IV, die einen oder mehrere makrocyclische(n) Ligand(en) mit den Donorfunktionen N und/oder NR enthalten, in denen R für einen Kohlenwasserstoffrest mit bis zu 20 C-Atomen, insbesondere mit bis zu 5 C-Atomen steht, ganz besonders für Methyl, Ethyl oder Propyl.

Bevorzugt werden Mangankomplexe eingesetzt mit Liganden ausgewählt aus der Gruppe 1,4,7-Trimethyl-1,4,7-triazacyclononan, 1,4,7-Triazacyclononan, 1,5,9-Trimethyl-1.[delta].[theta]-triazacyclododecan, 2-Methyl-1,4,7- trimethyl-1,4,7-triazacyclononan, 2-Methyl-1,4,7- triazacyclononan, 1,2-bis-(4,7-Dimethyl-1,4,7-triazacyclo-nono-1-yl) ethan, Cyclam oder dessen methylsubstituierte Derivate und/oder Cyclen oder dessen methylsubstituierte Derivate, insbesondere 1,8-Dimethylcyclam, 1,7-Dimethylcyclen, 1,8-Diethylcyclam, 1,7-Diethylcyclen, 1,8-Dibenzylcyclam oder 1,7-Dibenzylcyclen.

Besonders bevorzugte Liganden sind 1 ,4,7-Trimethyl-1,4,7-triazacyclononan (Me-TACN), 1,4,7-Triazacyclononan (TACN) oder verbrückte Liganden wie 1,2-bis-(4,7-Dimethyl-1,4,7-triazacyclonono-1-yl) ethan (Me4-DTNE), wie sie z.B. in EP 0 458 397, EP 0 458 398, EP 0 549 272, EP 0 530 870, WO 96/06154, WO 96/06157 oder WO 2006/125517 beschrieben sind.

Besonders bevorzugte im Rahmen der vorliegenden Erfindung eingesetzte Bleichkatalysatoren sind bleichverstärkende Mangankomplexe nachfolgenden Formel (1) oder der nachfolgenden Formel (2) 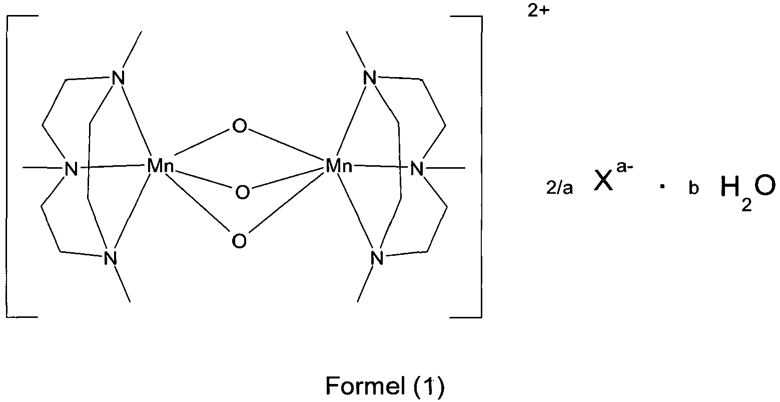 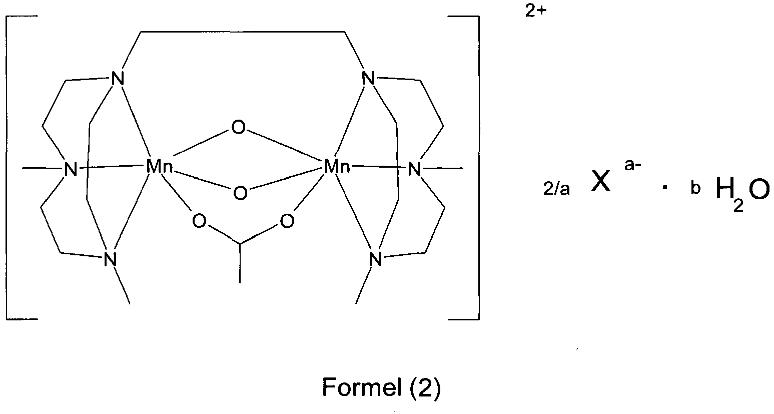 wobei a 1 oder 2 ist, b eine Zahl von 0 bis 4 ist, X für ein beliebiges ein- oder zweiwertiges Anion steht, bevorzugt für ein Anion einer Carbonsäure, ein Halogenidanion, ein Sulfatanion oder ein Hexafluorphosphatanion, ein Hexafluorantimonatanion oder ein Tetrafluorboratanion, insbesondere für PF₆⁻ , CH₃COO⁻, Cl⁻ oder SO₄²⁻, und ganz besonders für PF₆⁻.

Ganz besonders bevorzugte Pulver enthalten als Bleichkatalysator Bis (N,N',N"-trimethyl-1,4,7-triazacyclononane)-trioxo-dimangan (IV) di(hexafluorophosphat) monohydrat, das als Peractive ® MnTACN erhältlich ist.

Die Mangankomplexe mit stickstoffhaltigen Liganden, wobei von den Liganden einer oder mehrere makrocyclische Liganden sind, insbesondere die Mangankomplexe der Formeln (1) oder (2) liegen zu mindestens 80 Gew. %, vorzugsweise zu mindestens 90 Gew. % und insbesondere zu 95 bis 100 Gew. % in den feinteiligen Partikeln vor.

Es wurde gefunden, daß feinteilige Pulver enthaltend Partikel mit mindestens 80 Gew. % eines Mangankomplexes mit Stickstoff enthaltenden Liganden, wobei von den Liganden einer oder mehrere makrocyclische Liganden sind, insbesondere eines Mangankomplexes der Formel (1) oder Formel (2), durch ein ausgewähltes Mahlverfahren hergestellt werden können, wobei die feinteiligen Pulver dadurch gekennzeichnet sind, dass mindestens 70 Gew.-% der Partikel Teilchengrößen im Bereich von 5 µm bis 50 µm aufweisen, höchstens 15 Gew. % der Partikel Teilchengrößen > 50 µm aufweisen und höchstens 15 Gew. % der Partikel Teilchengrößen < 5 µm aufweisen, wobei die Prozentangaben auf die Gesamtmenge der Partikel bezogen sind.

Dieses Verfahren umfasst die Maßnahmen
i) Einbringen eines Mahlgutes aus partikelförmigem Material enthaltend mindestens 80 Gew. % an Mangankomplexen mit Stickstoff enthaltenden Liganden, wobei von den Liganden einer oder mehrere makrocyclische Liganden sind, insbesondere Mangankomplexe gemäß der Formel (1) oder gemäß der Formel (2), in eine Mahlapparatur ausgewählt aus der Gruppe der Strahlmühle oder der mit Kühlvorrichtung ausgestatteten Stiftmühle, wobei die Mahlapparatur mit einer Sichtervorrichtung ausgestattet ist,
ii) Vermahlen des partikelförmigen Materials zu einem feinteiligen Pulver, mit der Massgabe, dass
iii) die Temperatur des Mahlgutes während des Vermahlens 95°C nicht überschreiten darf.

Das Vermahlen in Schritt ii) erfolgt unter solchen Bedingungen, dass mindestens 70 Gew.-% der Gesamtmenge der erhaltenen Partikel des feinteiligen Pulvers Teilchengrößen im Bereich von 1 µm bis 50 µm aufweisen, höchstens 15 Gew.-% der Partikel Teilchengrößen > 50 µm aufweisen und höchstens 15 Gew.-% der Partikel Teilchengrößen < 1µm aufweisen.

Bevorzugte Temperaturen des Mahlgutes während des Vermahlens betragen -15°C bis 95°C, bevorzugt < 70°C, besonders bevorzugt < 60°C, und ganz besonders bevorzugt < 50°C, um Zersetzung des Mn-Komplexes zu vermeiden. Dieses kann man durch Zufuhr von Kühlgas, wie beispielsweise Luft mit einer Temperatur von -45C bis 25°C oder durch Zufuhr von verflüssigten Gasen, wie beispielsweise Stickstoff, Sauerstoff oder Luft, während des Mahlvorgangs erreichen.

Mit dem erfindungsgemäßen Verfahren wird eine schonende Methode zum Zerkleinern von Bleichkatalysatorteilchen auf definierte Teilchengrößen bereit gestellt, bei dem kein oder nur ein sehr geringer Verlust an Bleichkatalysator infolge Zersetzung während des Mahlprozesses auftritt.

Durch die Kombination der oben genannten Mahlwerke mit einer Sichtervorrichtung kann der Anteil an definiertenTeilchengrößen gesteuert werden.

Bevorzugt werden die in der Sichtervorrichtung abgetrennten Grobteilchen in die Strahlmühle oder in die gekühlte Stiftmühle zurückgeführt.

Besonders bevorzugt wird das Mangankomplexe enthaltende partikelförmige Material im trockenen Zustand vermahlen.

Für den Einsatz im erfindungsgemäßen Verfahren eignet sich insbesondere die Strahlmühle als Mahlwerk, welche mit einem gasförmigen Fluid betrieben und dadurch gleichzeitig gekühlt wird. Bevorzugt eingesetzte Fluide sind Luft oder Stickstoff, die gegebenenfalls durch Einsatz gekühlter Wärmeträger vorgekühlt worden sind, um die Kühlwirkung dieser Fluide zu verstärken.

Durch den Einsatz dieser ausgewählten Mahlwerke in Kombination mit einer Sichtervorrichtung ist es möglich, die gewünschten feinteiligen Pulver zu erzeugen ohne signifikant negative, die Qualität des Mahlproduktes beeinflussende Größen, wie partielle oder vollständige Zersetzung, Verfärbungen oder Produktverbackungen in Kauf nehmen zu müssen. Signifikant bedeutet in diesem Zusammenhang eine maximale Zersetzung von 10% des ursprünglich enthaltenen Mangankomplexanteils. Bevorzugt werden allerdings Werte von maximal 5 % bzw. besonderst bevorzugt kein Abbau des ürsprünglich enthaltenen Mangankomplexanteils.

Mit anderen Mahlwerken, beispielsweise durch Einsatz von Reibmühlen, Walzenstühlen, Stiftmühlen ohne zusätzliche Kühlung, sowie Hammer- und Schlagmühlen, gelingt das Erzeugen von feinteiligen Pulvern mit unveränderter Aktivität im Hinblick auf den Aktiv-Gehalt und Farberhalt des Mangankomplexes nicht.

In einer besonders bevorzugten Ausführungsform des erfindungsgemäßen Verfahrens werden Partikel mit sehr breiter Teilchengrößenverteilung von 2 µm bis 0,1 mm enthaltend 80 bis 100 Gew.-% eines Mangankomplexes mit Stickstoff enthaltenden Liganden, wobei von den Liganden einer oder mehrere makrocyclische Liganden sind, insbesondere eines Mangankomplexes der Formel (1) oder der Formel (2) im Trockenverfahren unter Verwendung einer luftbetriebenen Strahlmühle, der eine Sichtervorrichtung nachgeschaltet ist, vermahlen.

Die erfindungsgemäßen Pulver eignen sich als Bleichkatalysatoren für Perverbindungen in Wasch- und Reinigungsmitteln. Diese Verwendung ist ebenfalls Gegenstand der vorliegenden Erfindung.

Vorzugsweise handelt es sich bei dem Wasch- und Reinigungsmittel um ein Geschirrspülmittel, insbesonderes um ein maschinelles Geschirrspülmittel.

Gegenstand der Erfindung sind auch Wasch- und Reinigungsmittel, insbesondere Geschirrspülmittel, enthaltend die erfindungsgemäßen Pulver mit den oben definierten volumenmittleren Teilchengrößen und enthaltend einen Mangankomplex mit Stickstoff enthaltenden Liganden, wobei von den Liganden einer oder mehrere makrocyclische Liganden sind, insbesondere einen Mangankomplex gemäß Formel (1) oder Formel (2).

Die erfindungsgemäßen Wasch- und Reinigungsmittel enthalten vorzugsweise eine Perverbindung.

Die erfindungsgemäßen Wasch- und Reinigungsmittel enthalten die oben beschriebenen feinteiligen Pulver vorzugsweise auf einem Trägermaterial aufgetragen und/oder als Compound mit einem Bleichaktivator.

Die erfindungsgemäßen Pulver mit den oben definierten Teilchengrößen und enthaltend einen Mangankomplex mit Stickstoff enthaltenden Liganden, wobei von den Liganden einer oder mehrere makrocyclische Liganden sind, insbesondere einen Mangankomplex gemäß Formel (1) oder Formel (2) als Bleichkatalysatoren können mit weiteren Mitteln abgemischt und granuliert werden.

Abmischungen oder Granulate der erfindungsgemäßen Pulver mit weiteren Mitteln enthalten typischerweise mindestens 2 Gew. % an Mangankomplex.

Geeignete Mittel sind Bleichaktivatoren, Tenside, Enzyme, Binder, Builder, Dispergiermittel, Inertstoffe und/oder weitere Zusatzstoffe.

Als Bleichaktivatoren kommen in Betracht mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n- Nonanoyloxi- oder n-Lauroyloxibenzolsulfonat (NOBS bzw. LOBS), acylierte Phenolcarbonsäuren, insbesondere Nonanoyloxi- oder Decanoyloxibenzoesäure (NOBA bzw. DOBA), Carbonsäureanhydride, insbesondere Phthalsäureanhydrid, acylierte mehrwertige Alkohole, insbesondere Triacetin, Ethylenglykoldiacetat und 2,5-Diacetoxy-2,5-dihydrofuran sowie acetyliertes Sorbitol und Mannitol beziehungsweise deren Mischungen (SORMAN), acylierte Zuckerderivate, insbesondere Pentaacetylglukose (PAG), Pentaacetylfruktose, Tetraacetylxylose und Octaacetyllactose sowie acetyliertes, gegebenenfalls N-alkyliertes Glucamin und Gluconolacton, und/oder N-acylierte Lactame, beispielsweise N-Benzoyl-caprolactam, enthalten. Hydrophil substituierte Acylacetale und Acyllactame werden ebenfalls bevorzugt eingesetzt.

Daneben können Nitrilderivate wie n-Methyl-Morpholinium-Acetonitril-Methylsulfat (MMA) oder Cyanomorpholin (MOR) als Bleichaktivatoren Verwendung finden. Auch Kombinationen konventioneller Bleichaktivatoren können eingesetzt werden.

Besonders bevorzugte Bleichaktivatoren sind TAED, NOBS und DOBA.

Das Gewichtsverhältnis von Bleichkatalysator(en) zu Bleichaktivator(en) beträgt typischerweise von 1 zu 2000 bis 1 zu 5, bevorzugt 1 zu 1000 bis 1 zu 500, und außerordentlich bevorzugt 1 zu 100 bis 1 zu 25.

Als Tenside können ein oder mehrere Tenside, insbesondere anionische Tenside und nichtionische Tenside und deren Gemische, aber auch zwitterionische und amphotere Tenside eingesetzt werden.

In Frage kommen Alkylethercarboxylate R-(OCH₂CH₂)ₓOCH₂COOM, wobei R für ein Alk(en)ylrest mit 12 bis 18 Kohlenstoffatomen, x für eine Zahl von 2 bis 5 und M für ein Alkali-, Erdalkali- oder Ammoniumion steht.

Die anionischen Tenside, können in Form ihrer Natrium-, Kalium- oder Ammoniumsalze eingesetzt werden, sowie als lösliche Salze organischer Basen, wie Mono-, Di- oder Triethanolamin.

Anionische Tenside sind in den erfindungsgemäßen Wasch- und Reinigungsmitteln vorzugsweise in Mengen von bis zu 10 Gew.-% und insbesondere in Mengen von 0,5 bis 5 Gew.-% enthalten.

Als nichtionische Tenside können alkoxylierte, vorteilhaft ethoxylierte und/oder propoxylierte, insbesondere primäre Alkohole mit vorzugsweise 8 bis 18 C-Atomen und durchschnittlich 1 bis 12 Mol Ethylenoxid (EO) und 2 bis 17 Mol Ethylenoxid (EO)/Propylenoxid (PO) pro Mol Alkohol, eingesetzt werden, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere werden Alkoholethoxylate mit linearen Resten aus Alkoholen nativen Ursprungs mit 12 bis 18 C-Atomen, z. B. aus Kokosöl, Palmöl, Talgfett oder Oleylalkohol, und durchschnittlich 2 bis 8 EO pro Mol Alkohol eingesetzt, besonders bevorzugt C₁₂-C₁₄-Alkohole mit 3 EO oder 4 EO, C₉-C₁₁-Alkohole mit 7 EO, C₁₃-C₁₅-Alkohole mit 3 EO, 5 EO, 7 EO oder 8 EO, C₁₂-C₁₈-Alkohole mit 3 EO, 5 EO oder 7 EO und Mischungen aus diesen, wie Mischungen aus C₁₂-C₁₄-Alkohol mit 3 EO und C₁₂-C₁₈-Alkohol mit 7 EO, Laurylalkohol mit 7 EO und 10 PO, Laurylalkohol mit 2 EO und 4 PO, Laurylalkohol mit 4 EO und 5 PO, Laurylalkohol mit 5 EO und 4 PO, Laurylalkohol mit 6 EO und 4 PO, Laurylalkohol mit 8 EO und 4 PO, C₁₀-C₁₂-Alkohol mit 4 EO und 4 PO, Isodecylalkohol mit 2 PO und 12 EO, Isodecylalkohol mit 2 PO und 4 EO, Undecylalkohol mit 8 EO und 2 PO, C₁₂-C₁₅-Oxoalkohol mit 2 EO und 5 PO, C₁₂-C₁₅-Oxoalkohol mit 4 EO und 4 PO, C₁₂-C₁₅-Oxoalkohol mit 5 PO und 2 EO, C₁₂-C₁₅-Oxoalkohol mit 6EO und 4 PO, C₁₂-C₁₅-Oxoalkohol mit 8 EO und 4 PO, C₆-C₁₂-Alkohol mit 6 EO und 8 PO eingesetzt.

Die vorstehend angegebenen Ethoxylierungsgrade und Propoxyklierungsgrade stellen statistische Mittelwerte dar, die für ein spezielles Produkt eine ganze oder eine gebrochene Zahl sein können.

Das Gewichtsverhältnis eines oder mehrerer Bleichkatalysatoren zu einem oder mehreren Tensiden beträgt in der Regel 1 zu 10000 bis 1 zu 1000, bevorzugt 1 zu 5000 bis 1 zu 3000.

Als Enzyme in Betracht kommen die üblicherweise in Wasch- und Reinigungsmitteln eingesetzten Enzyme, z. B. Proteasen, Amylasen, Mannasen, Lipasen, Endolasen, Pectinasen, Cellulasen, Pullinasen, Cutinasen oder Peroxidasen, Phospholipasen, Cellobiohydrolasen, Esterasen, Kertatinasen, Reductasen, Oxidasen, Ligninasen, Arabinosidasen, Gulcosinasen und/oder Perhydrolasen.

An Proteasen zur Verfügung stehen beispielsweise Liquanase<®> Ultra 2,0 XL, BLAP<®>, Opticlean<®>, Maxacal<®>, Maxapem<®>, Esperase<®>, Savinase<®>, Purafect<®>, OxP und/oder Duraxym<®>,
an Amylasen beispielsweise Steinzyme<®> Plus 12L, Termamyl<®>, Amylase<®> LT, Maxamyl<®>, Duramyl<®> und/oder Pruafect<®> Ox,
an Mannasen beispielsweise Mannaway 4,0 L,
an Lipasen beispielsweise Lipex<®> 100 L, Lipolase<®>, Lipomax<®>, Lumafast<®> und/oder Lipozym<®>,
an Endolasen beispielsweise Endolase<®> 5000L,
an Pectinasen beispielsweise Pectinex 3X L und/oder Pectinex Ultra SPL und an Cellulasen beispielsweise Carezyme 1000 L und/oder Celluclast 1.5 L zur Verfügung.

Das Gewichtsverhältnis eines oder mehrerer Bleichkatalysatoren zu einem oder mehreren Enzymen beträgt in der Regel 1 zu 100 bis 100 zu 1, bevorzugt 1 zu 10 bis 10 zu 1, besonders bevorzugt 1 zu 5 bis 5 zu 1 und außerordentlich bevorzugt 1 zu 3 bis 3 zu 1. Die Gewichtsmengen der Enzyme beziehen sich auf 100% Enzymprotein.

Geeignete Binder sind homo- oder copolymere Polycarboxylate, insbesondere Polymere oder Copolymere der Acrylsäure und/oder der Methacrylsäure (auch "Poly-(meth)acrylsäure" genannt), vorzugsweise in Form ihrer Salze oder in teilneutralisierter Form. Diese können vorzugsweise 1 %-ig gelöst in Wasser eingesetzt werden und weisen einen pH-Wert von 3 bis 9, insbesondere aber zwischen 3,5 und 8,5 auf. Bevorzugt eingesetzt werden Polyacrylsäure oder Polymethacrylsäure, insbesondere solche mit einer mittleren Molmasse von 500 bis 70.000 g/mol.

Darunter bevorzugt sind Poly(meth)acrylate, die bevorzugt eine Molmasse von 2.000 bis 20.000 g/mol aufweisen. Aufgrund ihrer überlegenen Löslichkeit bevorzugt aus dieser Gruppe sind vor allem die kurzkettigen Poly(meth)acrylate, die Molmassen von 2.000 bis 10.000 g/mol und bevorzugt von 3.000 bis 5.000 g/mol aufweisen.

Weitere mit Vorzug als Bindemittel eingesetzte anionische Polymere sind Sulfonsäuregruppenhaltige Polymere, insbesondere Copolymere aus ungesättigten Carbonsäuren, Sulfonsäuregruppenhaltigen Monomeren und gegebenenfalls weiteren ionogenen oder nichtionogenen Monomeren.

Als Builder in Betracht kommen wasserlösliche organischen Buildersubstanzen, bevorzugt Polycarbonsäuren oder deren Salze, insbesondere Zitronensäure und Zuckersäuren, Aminopolycarbonsäuren, insbesondere Methylglycindiessigsäure oder ihrem Salz (MGDA), Glutamindiessigsäure oder ihrem Salz (GLDA) und Ethylendiamindibernsteinsäure oder ihrem Salz (EDDS), Nitrilotriessigsäure und Ethylendiamintetraessigsäure sowie Polyasparaginsäure. Polyphosphonsäuren, insbesondere Aminotris(methylen-phosphonsäure), Ethylendiamintetrakis(methylen-phosphonsäure) und 1 -Hydroxyethan-1 ,1- diphosphonsäure, können ebenfalls eingesetzt werden.

Bevorzugte Builder oder Co-Builder sind auch Polycarbonsäuren, insbesondere die durch Oxidation von Polysacchariden beziehungsweise Dextrinen zugänglichen Polycarboxylate, wie in WO 93/16110 A1, WO 92/18542 A1 oder EP 0 232 202 A2 beschrieben, sowie polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können.

Weitere mögliche wasserlösliche Builder-Komponenten sind neben Polyphosphonaten und Phosphonatalkylcarboxylaten zum Beispiel organische Polymere nativen oder synthetischen Ursprungs vom oben aufgeführten Typ der Polycarboxylate, die insbesondere in Hartwasserregionen als Co-Builder wirken, und natürlich vorkommende Hydroxycarbonsäuren wie zum Beispiel Mono-, Dihydroxybernsteinsäure, alpha-Hydroxypropionsäure und Gluconsäure. Ebenso können die Salze der Zitronensäure, insbesondere Natriumcitrat, sowohl wasserfreies Trinatriumcitrat, als auch Trinatriumcitratdihydrat eingesetzt werden.

Als Inertstoffe kommen beispielsweise SiO₂ oder TiO₂ in Betracht.

Als weitere Zusatzstoffe in Betracht kommen beispielsweise Oxalsäure, Ascorbinsäure und Glyoxalsäureester und deren Acetale oder Halbacetale, welche die Wirksamkeit der Bleichkatalysatoren noch verstärken.

Die Mischungen, enthaltend die erfindungsgemäßen Bleichkatalysatorpulver und weitere Mittel können nach gängigen Methoden gemischt und granuliert werden.

Nach einem bevorzugten Herstellverfahren werden die erfindungsgemäßen Bleichkatalysatorpulver mit einem Bleichaktivator und einer Polycarbonsäure gemischt und zu Cogranulaten wie in WO 2014/198369 A1 beschrieben verarbeitet.

Bevorzugte Bleichkatalysator-Co-Granulate haben eine mittlere Teilchengröße zwischen 0,1 und 1 ,6 mm, vorzugsweise zwischen 0,2 und 1 ,2 mm und besonders bevorzugt zwischen 0,3 und 1 ,0 mm aufweist, jeweils gemessen durch Siebanalyse.

Bevorzugte erfindungsgemäße Wasch- und Reinigungsmittel, insbesondere die Mittel für die maschinelle Reinigung von Geschirr, enthalten die erfindungsgemäßen Bleichkatalysatorpulver von typischerweise in Mengen mit einem Mangangehalt von 0,0005 Gew.-% bis 0,3 Gew.-%, bezogen auf die fertigen Mittel für die maschinelle Reinigung von Geschirr, die als Granulate, pulver- oder tablettenförmige Feststoffe aber auch in flüssiger oder pastöser Form vorliegen können.

Die erfindungsgemäßen Geschirrspülmittel können insbesondere Builder, Persauerstoffverbindungen, Enzyme, Alkaliträger, oberflächenaktive Tenside, pH-Regulatoren, organische Lösungsmittel und weitere Hilfsstoffe, wie Glaskorrosionsinhibitoren, Silberkorrosionsinhibitoren und Schaumregulatoren enthalten. Die erfindungsgemäßen Bleichkatalysatorpulver sind sowohl zum Einsatz in phosphathaltigen als auch phosphatfreien Formulierungen geeignet.

Besonders bevorzugte Wasch- und Reinigungsmittel, insbesondere Mittel für die maschinelle Reinigung von Geschirr, enthalten
15 bis 65 Gew.-%, vorzugsweise 20 bis 60 Gew.-% eines wasserlöslichen Builders, 5 bis 20 Gew.-%, vorzugsweise 8 bis Gew.-%, einer Persauerstoffverbindung, 0,0005 Gew.-% bis 0,3 Gew.-% Mn-Gehalt eines erfindungsgemäßen Bleichkatalysators, und
0 bis 50 Gew.-% weiterer Zusatzstoffe, wie Enzyme, Alkaliträger, oberflächenaktive Tenside, pH-Regulatoren, organische Lösungsmittel oder weitere Hilfsstoffe, wie Glaskorrosionsinhibitoren, Silberkorrosionsinhibitoren und Schaumregulatoren, jeweils bezogen auf das Gesamtgewicht des Geschirrspülmittels.

Ein derartiges Mittel ist insbesondere niederalkalisch, d. h. seine 1-Gew.-%ige Lösung weist einen pH-Wert im Bereich von 8 bis 11 ,5 und vorzugsweise von 9 bis 11 auf.

Die nachfolgenden Beispiele sollen die Erfindung erläutern ohne sie darauf einzuschränken. Alle Prozentangaben sind, sofern nicht explizit anders angegeben, als Gewichtsprozent (Gew.-%) zu verstehen.

Beispiel: Erfindungsgemäßes Verfahren zum Vermahlen von Bis (N,N',N"-trimethyl-1,4,7-triazacyclononane)-trioxo-dimangan (IV) di(hexafluorophosphat) monohydrat, hergestellt gemäß EP 0 458 397 A2

### Beispiel 1 (erfindungsgemäß)

In einer handelsüblichen Spiralstrahlmühle der Firma Alpine 100 AFG mit Stickstoffbetrieb wurden 50 kg handelsübliches Peractive® MnTACN der Firma WeylChem Wiesbaden bei einem Durchsatz von 8 kg/h vermahlen. Die Produkttemperatur gemessen im Mahlgutstrom mittels PT100 betrug maximal 45°C. Der Mühle angeschlossen war eine Sichterapparatur zur Abtrennung von Grobgut, welches anschließend in den Vermahlungsprozess unmittelbar wieder zugeführt wurde. Die Sichterapparatur wurde in ihren Parametern so eingestellt, dass eine obere Korngrößenbegrenzung bei D₉₇von < 30 µm eingehalten wird.

Die chemische Analyse des Mahlgutes belegte, dass es zu keinem messbaren Abbau der ursprünglichen Aktivität des MnTACN's kam. Mittels Laser-Diffraktometrie unter Anwendung der Norm ISO13320 (2009) wurde im Mahlgut einD₉₉ < 50µm und ein D₁₀ < 1µm ermittelt.

### Beispiel 2 (Vergleichsbeispiel)

In einer kontinuierlich arbeitenden Schlagkreuzmühle der Firma IKA (Typ MFC KB15) wurde unter Verwendung eines feinen Locheinsatzes von 0,6 mm bei einer Drehzahl von bis zu 5000 Upm das handelsübliche Peractive® MnTACN der Firma WeylChem Wiesbaden GmbH dosiert aufgegeben. Das so erhaltene Produkt wurde mittels Lichtmikroskop der Firma Olympos Typ SZH-ILLP untersucht und wies noch immer deutlich nadelförmige Strukturen auf, wobei neben sehr feinen Teilchen hohe Anteile an groben Teilchen mit einem Partikeldurchmesser über 50 µm vorhanden waren. Die groben, nadel- oder stäbchenförmigen Teilchen mit einem Partikeldurchmesser über 50 µm konnten mit der Schlagkreuzmühle nicht oder nur in sehr geringem Umfang zerkleinert werden.

Auch unter Verwendung von noch feineren Locheinsätzen von 0,2mm und wiederholter Aufgabe auf die Mühle waren mit Hilfe dieser Vermahltechnik die erfindungsgemäßen Teilchengrößenverteilungen nicht einzustellen.

### Beispiel 3 (Vergleichsbeispiel)

In einer handelsüblichen Siebmühle der Firma Alexanderwerk Typ (RFG150) wurden bei einer Umlaufgeschwindigkeit von 1m/s 500kg handelsübliches Peractive® MnTACN der Firma WeylChem Wiesbaden mit einem D₉₇ von 120 µm durch ein 150 µm Sieb innerhalb von 24 Stunden vermahlen. Die Produkttemperatur gemessen im Mahlgutstrom mittels PT100 betrug maximal 45°C. Das erhaltene Produkt wies einen D₉₇ von 83 µm auf. Unter dem Mikroskop (Lichtmikroskop der Firma Olympus) konnte man sowohl sehr kleine Teilchen mit einem Teilchendurchmesser von < 10 µm erkennen, aber auch einen sehr großen Anteil an stäbchenförmigem Material mit einer Länge von deutlich über 100 µm. Insgesamt war es auch bei Verwendung des feinsten Siebes und bei mehrfachem Durchlauf nicht möglich, mit Hilfe dieser Vermahltechnik die erfindungsgemäßen Teilchengrößenverteilungen einzustellen.

### Beispiel 4 (Vergleichsbeispiel)

In einer Alpine StiftmühleUPZ315 der Firma Alpine mit Stiftscheibe glatt, wurden 500 kg handelsübliches Peractive® MnTACN der Firma WeylChem Wiesbaden bei einer Umlaufgeschwindigkeit des Rotors von 9000 U/min bei einem Durchsatz von ungefähr 240 kg/h in kontinuierlicher Verfahrensweise vermahlen. Die dabei erreichte maximale Produkttemperatur nach dem Mahlschritt (gemessen am Auslass mittels PT100) betrug maximal 44°C.

Das Produkt zeigte eine sehr deutliche Klumpenbildung (bis zu 2 cm) mit Schwarzverfärbung der Klumpen im Inneren. Die Größe und Härte dieser Klumpen machen eine weitere Verabeitung des Mahlgutes unmöglich.

Neben den physikalischen Nachteilen wurde zudem ein deutlicher Aktivitätsverlust des Ausgangsproduktes von bis zu 50% detektiert. Dieser beruht wahrscheinlich auf einer zu hohen Wärmebelastung während des Mahlvorganges. Schwarze Beläge an den Stiften deuten auf einen solchen Zersetzungmechanismus hin.

### Maschinelles Geschirrspülmittel

| Zusammensetzung | Gew.-% (tel quel) |
|---|---|
| | |
| Peractive® MnTACN vermahlen gemäß Beispiel 1 | 0,015 |
| MGDA | 20 |
| Natriumcitrat | 13 |
| Natriumcarbonat | 25,5 |
| Sokalan® PA3OCL | 6 |
| Natriumpercarbonat | 15 |
| Genapol EP 2544 | 1,5 |
| Blaze evity® 100 T | 0,7 |
| Stainzyme® 12T | 0,6 |
| Natriumsulfat | 17,685 |

### Eingesetzte Handelsprodukte

MGDA (Alanine, N,N-bis(carboxymethyl)-, trisodium salt), Hersteller BASF AG Peractive® MnTACN, Mn-Bleichkatalysator, Hersteller Weylchem Wiesebaden Sokalan® PA3OCL, Polycarboxylat, Hersteller BASF AG
Genapol® EP 2544, C₁₂/C₁₅-Oxoalkohol EO-PO Addukt, Hersteller Clariant Blaze evity® 100 T, Enzymmischung, Hersteller Novozymes
Stainzyme® 12T, Enzym, Hersteller Novozymes

Herstellweise: Die Komponenen, Natriumcarbonat, Natriumcitrat und Natriumsulfat wurden vorgelegt, im Lödige-Mischer bei Raumtemperatur im Zeitraum von 15 Monuten homogen vermischt und in einen Turbula-Mischer überführt. Genapol® EP2544 wurde langsam unter Mischen im Turbula-Mischer zugegeben und im Zeitraum von 10 Minuten homogen vermischt. Alle weiteren Komponenten wurden nacheinander zugegeben und im Zeitraum von 10 Minuten homogen vermischt.

Dieses Geschirrspülmittel zeigte eine außerordentlich gute Reinigungswirkung, insbesondere gegenüber Teeflecken.

## Patentansprüche

1. Feinteiliges Pulver enthaltend Partikel mit mindestens 80 Gew. % eines Mangankomplexes mit Stickstoff enthaltenden Liganden, **dadurch gekennzeichnet, dass** von den Liganden einer oder mehrere makrocyclische Liganden sind, mindestens 70 Gew.-% der Partikel Teilchengrößen im Bereich von 1 µm bis 50 µm aufweisen, höchstens 15 Gew. % der Partikel Teilchengrößen > 50 µm aufweisen und höchstens 15 Gew. % der Partikel Teilchengrößen < 1 µm aufweisen, wobei die Prozentangaben auf die Gesamtmenge der Partikel bezogen sind.

2. Feinteiliges Pulver nach Anspruch 1, **dadurch gekennzeichnet, dass** der Mangankomplex ein Komplex des Mangans in der Oxidationsstufe II, III oder IV ist, der einen oder mehrere makrocyclische(n) Ligand(en) mit den Donorfunktionen N und/oder NR enthält, in denen R für einen Kohlenwasserstoffrest mit bis zu 20 C-Atomen steht, insbesondere für Methyl, Ethyl oder Propyl.

3. Feinteiliges Pulver nach mindestens einem der Ansprüche 1 oder 2, **dadurch gekennzeichnet, dass** der Mangankomplex die nachstehende Formel (1) oder (2) aufweist 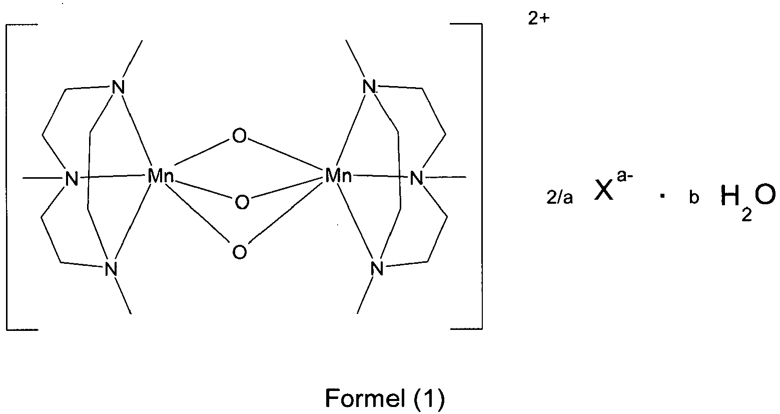 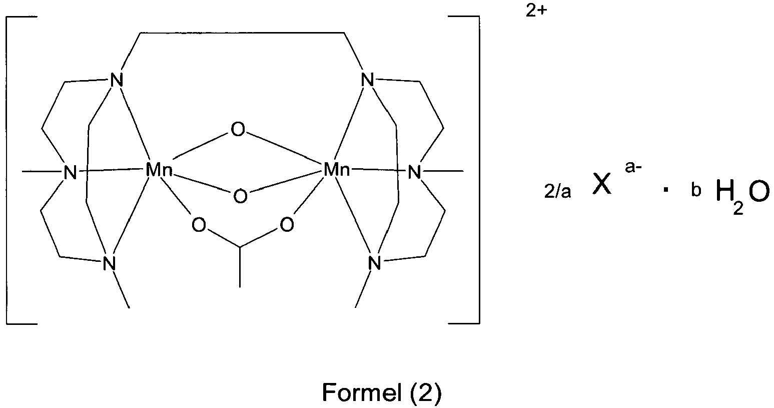 wobei a 1 oder 2 ist, b eine Zahl von 0 bis 4 ist, X für ein beliebiges ein- oder zweiwertiges Anion steht.

4. Feinteiliges Pulver nach Anspruch 3, **dadurch gekennzeichnet, dass** X für PF₆⁻, CH₃COO⁻, Cl⁻, SO₄²⁻, und insbesondere für PF₆⁻ steht.

5. Feinteiliges Pulver nach Anspruch 3, **dadurch gekennzeichnet, dass** der Mangankomplex Bis (N,N',N"-trimethyl-1,4,7-triazacyclononane)-trioxo-dimangan (IV) di(hexafluorophosphat) monohydrat ist.

6. Feinteiliges Pulver nach mindestens einem der Ansprüche 1 bis 5, **dadurch gekennzeichnet, dass** dieses keine Partikel mit Teilchengrößen von mehr als 100 µm und/oder keine Partikel mit Teilchengrößen von weniger als 100 nm aufweist.

7. Feinteiliges Pulver nach mindestens einem der Ansprüche 1 bis 6, **dadurch gekennzeichnet, dass** mindestens 90 Gew. % der Partikel Teilchengrößen im Bereich von 2 µm bis 50 µm aufweisen, höchstens 5 Gew. % der Partikel Teilchengrößen > 50 µm aufweisen und höchstens 5 Gew. % der Partikel Teilchengrößen < 2 µm aufweisen, wobei die Prozentangaben auf die Gesamtmenge der Partikel bezogen sind.

8. Feinteiliges Pulver nach mindestens einem der Ansprüche 1 bis 7, **dadurch gekennzeichnet, dass** dieses volumenmittlere Teilchengrößen D₅₀ im Bereich von 2 bis 25 µm aufweist.

9. Feinteiliges Pulver nach mindestens einem der Ansprüche 1 bis 8, **dadurch gekennzeichnet, dass** dieses volumenmittlere Teilchengrößen D₉₇ im Bereich von 8 bis 35 µm aufweist.

10. Feinteiliges Pulver nach Anspruch 9, **dadurch gekennzeichnet, dass** dieses volumenmittlere Teilchengrößen D₉₇ im Bereich von 10 bis 30 µm aufweist.

11. Feinteiliges Pulver nach Anspruch 10, **dadurch gekennzeichnet, dass** dieses volumenmittlere Teilchengrößen D₉₇ im Bereich von 11 bis 25 µm aufweist.

12. Feinteiliges Pulver nach Anspruch 11, **dadurch gekennzeichnet, dass** dieses volumenmittlere Teilchengrößen D₉₇ im Bereich von 12 bis 20 µm aufweist.

13. Verfahren zur Herstellung eines feinteiligen Pulvers nach Anspruch 1 mit den Maßnahmen
i) Einbringen eines Mahlgutes aus partikelförmigem Material enthaltend mindestens 80 Gew. % an Mangankomplexen mit Stickstoff enthaltenden Liganden, wobei von den Liganden einer oder mehrere makrocyclische Liganden sind, in eine Mahlapparatur ausgewählt aus der Gruppe der Strahlmühle oder der mit Kühlvorrichtung ausgestatteten Stiftmühle, wobei die Mahlapparatur mit einer Sichtervorrichtung ausgestattet ist,
ii) Vermahlen des partikelförmigen Materials zu einem feinteiligen Pulver, mit der Massgabe, dass
iii) die Temperatur des Mahlgutes während des Vermahlens 95°C nicht überschreiten darf.

14. Verfahren nach Anspruch 13, **dadurch gekennzeichnet, dass** die Temperatur des Mahlgutes während des Vermahlens -15°C bis 95°C, bevorzugt < 70°C, besonders bevorzugt < 60°C, und ganz besonders bevorzugt < 50°C, beträgt.

15. Verfahren nach mindestens einem der Ansprüche 13 bis 14, **dadurch gekennzeichnet, dass** die Temperatur des Mahlgutes während des Vermahlens durch Zufuhr von Kühlgas oder durch Zufuhr von verflüssigten Gasen kontrolliert wird.

16. Verfahren nach mindestens einem der Ansprüche 13 bis 15, **dadurch gekennzeichnet, dass** die in der Sichtervorrichtung abgetrennten Grobteilchen in die Strahlmühle oder in die gekühlte Stiftmühle zurückgeführt werden.

17. Verfahren nach mindestens einem der Ansprüche 13 bis 16, **dadurch gekennzeichnet, dass** das Mangankomplexe enthaltende partikelförmige Material im trockenen Zustand vermahlen wird.

18. Verfahren nach mindestens einem der Ansprüche 13 bis 17, **dadurch gekennzeichnet, dass** Partikel mit sehr breiter Teilchengrößenverteilung von 2 µm bis 0,1 mm enthaltend 80 bis 100 Gew.-% eines Mangankomplexes mit Stickstoff enthaltenden Liganden, wobei von den Liganden einer oder mehrere makrocyclische Liganden sind, im Trockenverfahren unter Verwendung einer luftbetriebenen Strahlmühle, der eine Sichtervorrichtung nachgeschaltet ist, vermahlen werden.

19. Verwendung des feinteiligen Pulvers nach mindestrens einem der Ansprüche 1 bis 12 als Bleichkatalysator für Perverbindungen in Wasch- und Reinigungsmitteln.

20. Verwendung nach Anspruch 19, **dadurch gekennzeichnet, dass** das Wasch- und Reinigungsmittel ein Geschirrspülmittel ist, insbesonderes ein maschinelles Geschirrspülmittel.

21. Wasch- und Reinigungsmittel enthaltend ein feinteiliges Pulver nach mindestens einem der Ansprüche 1 bis 12.

22. Wasch- und Reinigungsmittel nach Anspruch 21, **dadurch gekennzeichnet, dass** dieses eine Perverbindung enthält.

23. Wasch- und Reinigungsmittel nach mindestens einem der Ansprüche 21 bis 22, **dadurch gekennzeichnet, dass** das feinteilige Pulver auf einem Trägermaterial aufgetragen ist und/oder als Compound mit einem Bleichaktivator vorliegt.

## Claims

1. Fine-particulate powder containing particles with at least 80 % by weight of a manganese complex with nitrogen-containing ligands, wherein one or more of the ligands are macrocyclic ligands, wherein at least 70 % by weight of the particles have particle sizes in the range from 1 µm to 50 µm, at most 15 % by weight of the particles have particle sizes >50 µm and at most 15 % by weight of the particles have particle sizes <1 µm, wherein the percentages refer to the total amount of the particles.

2. The fine-particulate powder according to claim 1, wherein the manganese complex is a complex of manganese in the oxidation state II, III or IV, which contains one or more macrocyclic ligand(s) with the donor functions N and/or NR, in which R stands for a hydrocarbon residue with up to 20 C-atoms, preferably for methyl, ethyl or propyl.

3. The fine-particulate powder according to at least one of claims 1 or 2, wherein the manganese complex has the following formula (1) or (2) 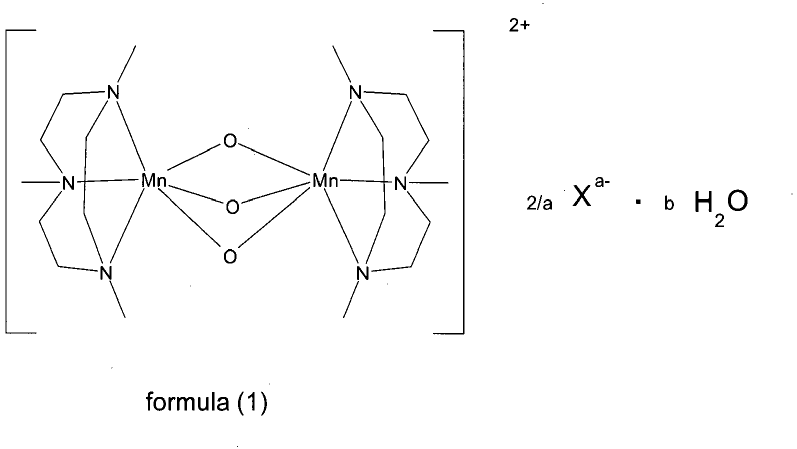 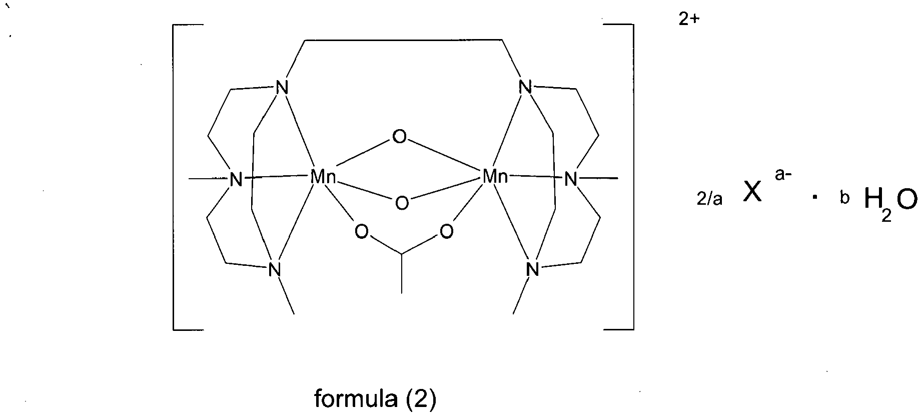 wherein a is 1 or 2, b is a number from 0 to 4, and X stands for any monovalent or bivalent anion.

4. The fine-particulate powder according to claim 3, wherein X stands for PF₆⁻, CH₃COO⁻, Cl⁻, SO₄²⁻, und preferably for PF₆⁻.

5. The fine-particulate powder according to claim 3, wherein the manganese-complex is bis (N,N',N"-trimethyl-1,4,7-triazacyclononane)-trioxo-dimanganese (IV) di(hexafluorophosphate) monohydrate.

6. The fine-particulate powder according to at least one of claims 1 to 5, wherein the powder does not contain particles with particle sizes of above 100 µm and/or does not contain particles with particle sizes of below 100 nm.

7. The fine-particulate powder according to at least one of claims 1 to 6, wherein at least 90 % by weight of the particles have particle sizes in the range from 2 µm to 50 µm, at most 5 % by weight of the particles have particle sizes >50 µm and at most 5 % by weight of the particles have particle sizes <2 µm, wherein the percentages refer to the total amount of particles.

8. The fine-particulate powder according to at least one of claims 1 to 7, wherein the powder has volume-average particle sizes D₅₀ in the range from 2 to 25 µm.

9. The fine-particulate powder according to at least one of claims 1 to 8, wherein the powder has volume-average particle sizes D₉₇ in the range from 8 to 35 µm.

10. The fine-particulate powder according to claim 9, wherein the powder has volume-average particle sizes D₉₇ in the range from 10 to 30 µm.

11. The fine-particulate powder according to claim 10, wherein the powder has volume-average particle sizes D₉₇ in the range from 11 to 25 µm.

12. The fine-particulate powder according to claim 11, wherein the powder has volume-average particle sizes D₉₇ in the range from 12 to 20 µm.

13. A process for preparing a fine-particulate powder according to claim 1 comprising the measures:
i) introduction of a milling stock of particulate material comprising at least 80 % by weight of manganese complexes with nitrogen-containing ligands, wherein of the ligands one or more are macrocyclic ligands, into a milling device selected from the group consisting of a jet mill or a pen mill equipped with a cooling device, wherein the milling device is equipped with a separator device,
ii) milling of the particulate material to a fine-particulate powder, with the proviso that
iii) the temperature of the milling stock during the milling process does not exceed 95°C.

14. The process according to claim 13, wherein the temperatures of the milling stock during the milling process are from -15°C to 95°C, preferably <70°C, particularly preferred <60°C, and particularly preferred <50°C.

15. The process according to at least one of claims 13 to 14, wherein the temperature of the milling stock during the milling process is controlled by supply of cooling gas or by supply of liquefied gases.

16. The process according to at least one of claims 13 to 15, wherein the coarse particles separated in the separator device are reintroduced into the jet mill or into the cooled pen mill.

17. The process according to at least one of claims 13 to 16, wherein manganese complexes containing particulate material is milled in a dry state.

18. The process according to at least one of claims 13 to 17, wherein particles with a very broad particle size distribution of 2 µm to 0.1 mm containing 80 to 100 % by weight of a manganese complex with nitrogen containing ligands, wherein of the ligands one or more are macrocyclic ligands, are milled in a dry process using an air-powered jet mill containing downstream a separator device.

19. Use of the fine-particulate powder according to at least one of claims 1 to 12 as a bleaching catalyst for per-compounds in washing and cleaning agents.

20. The use according to claim 19, wherein the washing and cleaning agent is a dishwashing agent, preferably a machine dishwashing agent.

21. Washing and cleaning agent comprising the fine-particulate powder according to at least one of claims 1 to 12.

22. The washing and cleaning agent according to claim 21, wherein this contains a per-compound.

23. The washing and cleaning agent according to at least one of claims 21 to 22, wherein the fine-particulate powder is applied to a carrier material and/or is a compound with a bleach activator.

## Revendications

1. Poudre finement divisée contenant des particules ayant au moins 80 % en poids d'un complexe de manganèse avec des ligands azotés, **caractérisée en ce qu'**un ou plusieurs des ligands sont des ligands macrocycliques, au moins 70 % en poids des particules présentent une granulométrie dans la gamme de 1 µm à 50 µm, au plus 15 % en poids des particules présentent une granulométrie > 50 µm et au plus 15 % en poids des particules présentent une granulométrie < 1 µm, les pourcentages étant basés sur la quantité totale de particules.

2. Poudre finement divisée selon la revendication 1, **caractérisée en ce que** le complexe de manganèse est un complexe de manganèse au degré d'oxydation II, III ou IV qui contient un ou plusieurs ligand(s) macrocyclique(s) avec les fonctions donneuses N et/ou NR, dans lesquelles R représente un radical hydrocarboné ayant jusqu'à 20 atomes de carbone, en particulier du méthyle, de l'éthyle ou du propyle.

3. Poudre finement divisée selon au moins l'une des revendications 1 ou 2, **caractérisée en ce que** le complexe de manganèse présente la formule (1) ou (2) suivante 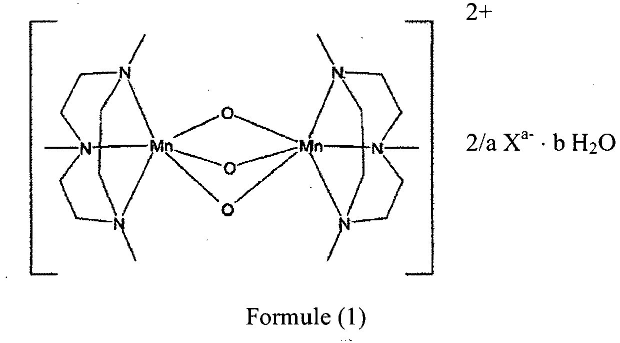 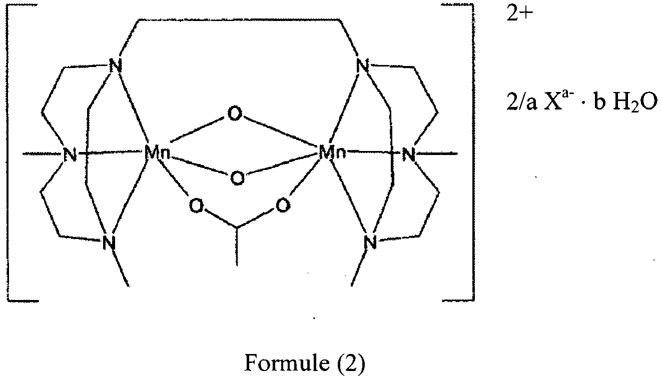 dans lesquelles a est 1 ou 2, b est un nombre de 0 à 4, X est un anion monovalent ou divalent quelconque.

4. Poudre finement divisée selon la revendication 3, **caractérisée en ce que** X représente PF₆⁻, CH₃COO⁻, Cl⁻, SO₄²⁻ et en particulier PF₆⁻.

5. Poudre finement divisée selon la revendication 3, **caractérisée en ce que** le complexe de manganèse est du bis(N,N',N"-triméthyl-1,4,7-triazacyclononane)-trioxo-dimanganèse (IV) di(hexafluorophosphate) monohydrate.

6. Poudre finement divisée selon au moins l'une des revendications 1 à 5, **caractérisée en ce qu'**elle ne présente aucune particule ayant une granulométrie supérieure à 100 µm et/ou aucune particule ayant une granulométrie inférieure à 100 nm.

7. Poudre finement divisée selon au moins l'une des revendications 1 à 6, **caractérisée en ce qu'**au moins 90 % en poids des particules présentent une granulométrie dans la gamme de 2 µm à 50 µm, au plus 5 % en poids des particules présentent une granulométrie > 50 µm et au plus 5 % en poids des particules présentent une granulométrie < 2 µm, les pourcentages étant basés sur la quantité totale de particules.

8. Poudre finement divisée selon au moins l'une des revendications 1 à 7, **caractérisée en ce qu'**elle présente une granulométrie moyenne en volume D₅₀ dans la gamme de 2 à 25 µm.

9. Poudre finement divisée selon au moins l'une des revendications 1 à 8, **caractérisée en ce qu'**elle présente une granulométrie moyenne en volume D₉₇ dans la gamme de 8 à 35 µm.

10. Poudre finement divisée selon la revendication 9, **caractérisée en ce qu'**elle présente une granulométrie moyenne en volume D₉₇ dans la gamme de 10 à 30 µm.

11. Poudre finement divisée selon la revendication 10, **caractérisée en ce qu'**elle présente une granulométrie moyenne en volume D₉₇ dans la gamme de 11 à 25 µm.

12. Poudre finement divisée selon la revendication 11, **caractérisée en ce qu'**elle présente une granulométrie moyenne en volume D₉₇ dans la gamme de 12 à 20 µm.

13. Procédé de production d'une poudre finement divisée selon la revendication 1 avec les mesures suivantes
i) introduction d'une matière broyée composée de matière particulaire contenant au moins 80 % en poids de complexes de manganèse avec des ligands azotés, un ou plusieurs des ligands étant des ligands macrocycliques, dans un appareil de broyage choisi dans le groupe constitué par le broyeur à jets ou le broyeur à broches équipé d'un dispositif de refroidissement, l'appareil de broyage étant équipé d'un dispositif séparateur,
ii) broyage de la matière particulaire en une poudre finement divisée, étant entendu que
iii) la température de la matière broyée ne doit pas dépasser 95 °C pendant le broyage.

14. Procédé selon la revendication 13, **caractérisé en ce que** la température de la matière broyée pendant le broyage est de -15 °C à 95 °C, de préférence < 70 °C, particulièrement de préférence < 60 °C, et tout particulièrement de préférence < 50 °C.

15. Procédé selon au moins l'une des revendications 13 à 14, **caractérisé en ce que** la température de la matière broyée pendant le broyage est contrôlée par amenée de gaz de refroidissement ou par amenée de gaz liquéfiés.

16. Procédé selon au moins l'une des revendications 13 à 15, **caractérisé en ce que** les grosses particules séparées dans le dispositif séparateur sont renvoyées au broyeur à jets ou au broyeur à broches refroidi.

17. Procédé selon au moins l'une des revendications 13 à 16, **caractérisé en ce que** la matière particulaire contenant des complexes de manganèse est broyée à l'état sec.

18. Procédé selon au moins l'une des revendications 13 à 17, **caractérisé en ce que** des particules ayant une très large distribution granulométrique de 2 µm à 0,1 mm contenant de 80 à 100 % en poids d'un complexe de manganèse avec des ligands azotés, un ou plusieurs des ligands étant des ligands macrocycliques, sont broyées à sec en utilisant un broyeur à jets fonctionnant à l'air qui est suivi d'un dispositif séparateur.

19. Utilisation de la poudre finement divisée selon au moins l'une des revendications 1 à 12 comme catalyseur de blanchiment pour percomposés dans des produits de lavage et de nettoyage.

20. Utilisation selon la revendication 19, **caractérisée en ce que** le produit de lavage et de nettoyage est un produit pour laver la vaisselle, en particulier un produit pour lave-vaisselle.

21. Produit de lavage et de nettoyage contenant une poudre finement divisée selon au moins l'une des revendications 1 à 12.

22. Produit de lavage et de nettoyage selon la revendication 21, **caractérisé en ce qu'**il contient un percomposé.

23. Produit de lavage et de nettoyage selon au moins l'une des revendications 21 à 22, **caractérisé en ce que** la poudre finement divisée est appliquée sur un matériau support et/ou est présente sous la forme d'un composé avec un activateur de blanchiment.
